# EUROPEAN PATENT SPECIFICATION

(11) **EP 3 115 176 B1**
(45) Date of publication and mention of the grant of the patent: **15.05.2019**
(21) Application number: 15758149.7
(22) Date of filing: 23.02.2015
(51) Int. Cl.: B29C 47/00, B29C 47/14, B29C 45/00, B29C 47/92, C08L 23/04, C08L 27/16, B29K 27/00

(54) **METHOD FOR MELT MOLDING OF VINYLIDENE FLUORIDE RESIN, AND MELT MOLDED PRODUCT OF VINYLIDENE FLUORIDE RESIN**
VERFAHREN ZUM SCHMELZFORMEN VON VINYLIDENFLUORIDHARZ UND SCHMELZGEFORMTES PRODUKT AUS VINYLIDENFLUORIDHARZ
PROCÉDÉ POUR LE MOULAGE DE RÉSINE DE FLUORURE DE VINYLIDÈNE À L'ÉTAT FONDU ET PRODUIT DE RÉSINE DE FLUORURE DE VINYLIDÈNE MOULÉ À L'ÉTAT FONDU

(30) Priority: 03.03.2014 JP 2014040866
(43) Date of publication of application: 11.01.2017
(73) Proprietor: Kureha Corporation, Chuo-ku Tokyo 103-8552 (JP)
(72) Inventor: IGARASHI, Tamito, Tokyo 103-8552 (JP); HIDAKA, Tomoyuki, Tokyo 103-8552 (JP); SUZUKI, Kazuyuki, Tokyo 103-8552 (JP); SUZUKI, Yasuhiro, Tokyo 103-8552 (JP)
(74) Representative: BRP Renaud & Partner mbB Rechtsanwälte Patentanwälte Steuerberater
(86) International application number: PCT/JP2015/055052
(87) International publication number: WO 2015/133315

(56) References cited:
- WO-A1-96/07701
- GB-A- 1 293 667
- JP-A- S6 099 152
- JP-A- S61 203 508
- JP-A- 2000 017 518
- JP-A- 2006 028 507
- JP-A- 2010 529 278

## Description

### TECHNICAL FIELD

The present invention relates to a melt molding method of a vinylidene fluoride resin, and a melt molded product of the vinylidene fluoride resin.

### BACKGROUND ART

Vinylidene fluoride resins have been processed and used by various molding methods, such as injection molding, extrusion molding, blow molding, compression molding, and powder molding, as fluororesins that can be melt-molded. Since a vinylidene fluoride resin with a high molecular weight exhibits high melt tension, drawdown in sheet extrusion, pipe extrusion, and the like is improved. Furthermore, strength of molded products produced from the vinylidene fluoride resin with a high molecular weight is enhanced. Therefore, vinylidene fluoride resins with a high molecular weight are suitable as raw materials.

### CITATION LIST

### Patent Literature

Patent Document 1: Japanese Examined Patent Application Publication No. S48-17376B (published on May 29, 1973)
Patent Document 2: Japanese Unexamined Patent Application Publication No. 2000-17518A (published on January 18, 2000)
Patent Document 3: WO/2006/045753 (published on May 4, 2006)
Patent Document 4: GB1293667 (published on October 18, 1972)

### SUMMARY OF INVENTION

### Technical Problem

Meanwhile, melt viscosity of the vinylidene fluoride resin with a high molecular weight tends to be high, and when the melt viscosity is excessively high, it hinders processability. As a countermeasure for this problem, it is possible to reduce the melt viscosity by setting processing temperature to high; however, discoloration and degradation of the resin readily occur due to the increased processing temperature. Therefore, technologies that allow melt molding to be performed at lower temperatures are desired.

Patent Document 1 discloses that melt processability is enhanced by mixing a predetermined amount of polyethylene to polyvinylidene fluoride. However, Patent Document 1 only discusses the content of the polyethylene using a homopolymer of vinylidene fluoride, and thus it is not known if Patent Document 1 can be applied to other vinylidene fluoride resins. Therefore, there is room for further improvement.

Patent Document 2 discloses that variation in thickness (denier) of a plurality of monofilaments extruded during high-speed extrusion can be made smaller by extrusion-molding a composition formed by mixing polyethylene with a vinylidene fluoride resin in a predetermined temperature condition. However, this is a technique to establish production stability and high-speed molding but not a technique to enable melt molding at a lower temperature. Furthermore, Patent Document 3 discloses molding of a composition containing a particular type of vinylidene fluoride resin and polyethylene; however, the addition of the polyethylene was not aiming at enabling melt molding at a lower temperature. Also Patent Document 4 discloses extruded or molded articles obtained from a mixture of vinylidene fluoride homopolymer or copolymer and polyethylene.

Therefore, development of a method of melting a vinylidene fluoride resin, with which the melt molding can be performed at a lower temperature, is desired.

### Solution to Problem

To solve the problem described above, the melt molding method of a vinylidene fluoride resin of the present invention includes melt-molding, at a shear rate of 1 s⁻¹ to 600 s⁻¹, a composition containing a vinylidene fluoride resin having a weight average molecular weight of 250,000 to 450,000 and polyethylene having a melt flow rate of 0.04 g/10 min to 40 g/10 min, and an amount of the polyethylene being from 0.1 parts by mass to 5.0 parts by mass per 100 parts by mass of the vinylidene fluoride resin, wherein the vinylidene fluoride resin is a mixture of at least two types of copolymers containing at least a vinylidene fluoride/hexafluoropropylene copolymer A containing 0.5% by mass or greater but less than 7.0% by mass of hexafluoropropylene, and a vinylidene fluoride/hexafluoropropylene copolymer B containing 8.0% by mass or greater but less than 20.0% by mass of hexafluoropropylene, the mixture forming a single phase system.

### Advantageous Effects of Invention

According to the melt molding method of the present invention, melt viscosity of a vinylidene fluoride resin is lowered. Therefore, melt molding at a lower temperature is made possible, thereby suppressing discoloration and degradation.

### Brief Description of Drawings

FIGS. 1A to 1C are charts showing measurement results of melt viscosities of PVDF-A, PVDF-B, and PVDF-C in Example 1 of the present invention.
FIGS. 2A and 2B are charts showing measurement results of melt viscosities of PVDF-D and PVDF-E in Example 1 of the present invention.

### Description of Embodiments

### Melt Molding Method of Vinylidene Fluoride Resin

The method of melt-molding a vinylidene fluoride resin of the present invention includes melt-molding, at a shear rate of 1 s⁻¹ to 600 s⁻¹, a composition containing a vinylidene fluoride resin having a weight average molecular weight of 250,000 to 450,000 and polyethylene having a melt flow rate of 0.04 g/10 min to 40 g/10 min, and an amount of the polyethylene being from 0.1 parts by mass to 5.0 parts by mass per 100 parts by mass of the vinylidene fluoride resin, wherein the vinylidene fluoride resin is a mixture of at least two types of copolymers containing at least a vinylidene fluoride/hexafluoropropylene copolymer A containing 0.5% by mass or greater but less than 7.0% by mass of hexafluoropropylene, and a vinylidene fluoride/hexafluoropropylene copolymer B containing 8.0% by mass or greater but less than 20.0% by mass of hexafluoropropylene, the mixture forming a single phase system .

Generally, in the present specification, "vinylidene fluoride resin" (hereinafter, simply referred to "PVDF") includes a homopolymer of vinylidene fluoride (VDF), and a copolymer of VDF and another monomer, the copolymer containing at least 50% by mass of the VDF. Examples of such another monomer include hexafluoropropylene (HFP), tetrafluoroethylene, trifluoroethylene, trifluorochloroethylene (CTFE), vinyl fluoride, fluoroalkyl vinyl ether, and (meth)acrylates, maleates. The other monomer is preferably HFP or CTFE. Furthermore, the PVDF used in the present invention may be one type of polymer or may be a mixture of two or more types of polymers.

The PVDF used in the present invention is a PVDF having a weight average molecular weight of 250,000 to 450,000, preferably 300,000 to 420,000, and more preferably 340,000 to 400,000. Melt viscosity can be effectively reduced when the weight average molecular weight of the PVDF is from 250,000 to 450,000. Note that, when a mixture of two or more types of polymers is used, the weight average molecular weight of the mixture needs to be within the range described above. Therefore, when a mixture of two or more types of polymers is used, polymer(s) having a weight average molecular weight of less than 250,000 or greater than 450,000 may be contained in the mixture. Note that the weight average molecular weight of PVDF in the present specification indicates a molecular weight measured by gel permeation chromatography calibrated with polystyrene and using N-methylpyrrolidone (NMP) as an eluent.

When the PVDF is a copolymer, the content of the monomer other than the VDF is preferably 0.5% by mass or greater but less than 30% by mass, more preferably 1% by mass or greater but less than 18% by mass, and even more preferably 2% by mass or greater but less than 12% by mass.

From the perspective of mechanical characteristics of the melt molded product, the PVDF is preferably a mixture of at least two types of polymers, and more preferably a mixture of at least two types of copolymers. When the PVDF is a mixture of at least two types of polymers, the mixing ratio thereof is not particularly limited; however, when the PVDF is a mixture of two types of polymers, for example, each of the amounts thereof can be set to 20% by mass to 80% by mass (total is 100% by mass) of the total amount of the PVDF.

Furthermore, the mixture of at least two types of polymers is a mixture that forms a single phase system since mechanical properties of the melt molded product tend to be inferior when a multi-phase system is formed. Whether a single phase system is formed can be determined by transmission electron microscope (TEM) observation.

The PVDF of the present invention is a mixture of two or more types of VDF/HFP copolymers having an HFP content that differs from one another. Note that, in the present specification, "VDF/HFP copolymer" includes a copolymer formed from VDF and HFP, and a copolymer of VDF, HFP, and one or more types of other monomer(s), the copolymer containing at least 70% by mass of VDF and the total amount of the other monomer being at least 0.5% by mass. Examples of the other monomer(s) include those exemplified above. For the case of a copolymer formed from VDF and HFP, for example, the content of the VDF can be set to 70 to 99.5% by mass, and the content of the HFP can be set to 0.5 to 30% by mass. Furthermore, for the case of a copolymer formed from VDF, HFP, and at least one type of other monomer, for example, the content of the VDF can be set to 70 to 99.5% by mass, the content of the HFP can be set to 0.4 to 29.9% by mass, and the content of the at least one type of other monomer can be set to 0.1 to 5% by mass. The content of the other monomer in the VDF/HFP copolymer is preferably from 0.1% by mass to 5.0% by mass, and more preferably from 0.5% by mass to 3.0% by mass. As the VDF/HFP copolymer, a copolymer formed from VDF and HFP (VDF/HFP copolymer) is preferable.

The PVDF of the present invention is a mixture at least containing a VDF/HFP copolymer A containing 0.5% by mass or greater but less than 7.0% by mass of HFP, and a VDF/HFP copolymer B containing 8.0% by mass or greater but less than 20.0% by mass of HFP. An example of even more preferable PVDF is a mixture at least containing a VDF/HFP copolymer A containing 1% by mass or greater but less than 5% by mass of HFP, and a VDF/HFP copolymer B containing 9% by mass or greater but less than 15% by mass of HFP. Note that the content of HFP is an amount based on the case where the amount of the VDF/HFP copolymer A or B is taken to be 100% by mass. From the perspective of forming a single phase system, the HFP content in the VDF/HFP copolymer A and the HFP content of the VDF/HFP copolymer B are preferably close. For example, the difference between the HFP contents of these is preferably 12% by mass or less, and more preferably 8% by mass or less.

In an even more preferable example of PVDF, the amount of the VDF/HFP copolymer A is from 20.0% by mass to 80.0% by mass of the total amount of the PVDF, and the amount of the VDF/HFP copolymer B is from 20.0% by mass to 80.0% by mass of the total amount of the PVDF.

Furthermore, in another example, both the VDF/HFP copolymer A and the VDF/HFP copolymer B are preferably VDF/HFP copolymers.

The form of the PVDF is not particularly limited, and examples thereof include pellet-like, powder-like, granular, flaky, and block-like forms, and chopped fiber.

The polyethylene used in the present invention has a melt flow rate (MFR) of 0.04 g/10 min to 40 g/10 min, preferably 0.08 g/10 min to 5.0 g/10 min, and more preferably 0.30 g/10 min to 3.5 g/10 min. With polyethylene having an MFR of 0.04 g/10 min to 40 g/10 min, miscibility with the PVDF is excellent, and melt viscosity is effectively reduced. On the other hand, when the MFR is less than 0.04 g/10 min, miscibility with the PVDF is poor, and melt molded product with poor appearance may be formed.

The density of the polyethylene used in the present invention is not particularly limited and may be, for example, from 0.90 g/cm³ to 1.00 g/cm³. The polyethylene used in the present invention may be low density polyethylene (LDPE) or high density polyethylene (HDPE). Note that, in the present invention, "LDPE" indicates polyethylene having a density of 0.91 g/cm³ or greater but less than 0.93 g/cm³. "HDPE" indicates polyethylene having a density of 0.93 g/cm³ to 1.00 g/cm³. From the perspective of effect of reducing melt viscosity, LDPE is preferable, and the density of 0.91 g/cm³ to 0.93 g/cm³ is preferable. Note that the density of polyethylene in the present specification indicates a density measured by the method of JIS K 6922-2:2010.

The polyethylene used in the present invention may be a homopolymer of ethylene or may be a copolymer of ethylene and other α-olefin (e.g. 1-butene, 1-hexene, 4-methyl-1-pentene, 1-octene, 1-decene, or the like) or propylene or the like.

The form of the polyethylene used in the present invention is not particularly limited, and examples thereof include pellet-like, powder-like, granular, and flaky forms, and chopped fiber.

The amount of the polyethylene in the composition is from 0.1 parts by mass to 5.0 parts by mass, preferably from 0.2 parts by mass to 3 parts by mass, more preferably from 0.25 parts by mass to 1.0 part by mass, and even more preferably from 0.5 parts by mass to 1.0 part by mass, per 100 parts by mass of the PVDF described above. When the amount of the polyethylene is less than 0.1 parts by mass, the effect of reducing melt viscosity is significantly deteriorated. Furthermore, when the amount of the polyethylene is greater than 5 parts by mass, the strength of melt molded product tends to decrease.

Furthermore, the composition may further contain another component besides the PVDF and the polyethylene. Examples of such a component include coloring preventing agents, such as hydroxides and carbonates of Ca, Ba, Zn, and Mg, hydroxides of Sn and Al, and oxides of Zn and Mg; and additives such as a phenol stabilizer described in Japanese Unexamined Patent Application Publication No. 2008-19377A. The content of the additive may be suitably set; however, for example, the content may be 3 parts by mass or less, preferably 1 part by mass, per 100 parts by mass of the PVDF. Furthermore, other examples of the component besides the PVDF and the polyethylene include resins other than the PVDF, and specific examples thereof include PTFE, and polymethylmethacrylate. The content of the resin other than the PVDF may be appropriately set; however, for example, the content may be 10 parts by mass or less, and preferably 3 parts by mass or less, per 100 parts by mass of the PVDF.

In the melt molding method according to the present invention, the composition described above is melt-molded. The composition may be fed to a melt molding device as a mixture in which the raw materials described above are mixed, or may be fed to a melt molding device as pellets formed by melt-kneading and melt-extruding in advance using an extruder.

The shear rate during the melt molding is from 1 s⁻¹ to 600 s⁻¹, preferably from 10 s⁻¹ to 400 s⁻¹, more preferably from 20 s⁻¹ to 100 s⁻¹, and even more preferably from 30 s⁻¹ to 80 s⁻¹. When the shear rate is from 1 s⁻¹ to 600 s⁻¹, the melt viscosity is effectively reduced. Furthermore, a smaller shear rate results in more effective reduction in the melt viscosity. Note that, in the present specification, "shear rate" indicates an average shear rate employed during molding. For convenience, for injection molding, "shear rate" indicates a shear rate at a tip portion of a nozzle of an injection molding device, and for extrusion molding, "shear rate" indicates a shear rate at a discharging port of a die.

The method of melt molding is not particularly limited, and examples thereof include extrusion molding, injection molding, blow molding, and compression molding. From the perspective of strength of the molded product, extrusion molding is preferable. Publicly known melt molding devices can be used.

The temperature during the melt molding may be appropriately set depending on the type of the PVDF; however, for example, the resin temperature is from 170°C to 260°C, and preferably from 180°C to 250°C. According to the melt molding method of the present invention, melt viscosity of a PVDF is reduced. The melt viscosity of the PVDF can be reduced to 60%, preferably 40%, and more preferably 20%, compared to the case where polyethylene is not added, for example. That is, the temperature at which the PVDF exhibits the same melt viscosity, i.e. a temperature at which processing is possible, is lowered compared to the case where polyethylene is not added. Therefore, melt molding can be performed at a lower temperature. Therefore, discoloration and degradation in the melt molded product can be suppressed. Furthermore, since the melt viscosity of the PVDF is reduced, the torque of the melt molding device does not need to be high.

### Melt Molded Product

The melt molded product according to the present invention is produced by the melt molding method described above.

Examples of the melt molded product include films, sheets, plates, filaments, bars, tubes, hoses, pipes, and valves or joints.

Since the processing can be performed at a lower temperature in the melt molding method of the present invention as described above, discoloration and degradation are suppressed in the melt molded product of the present invention. Furthermore, the melt molded product of the present invention has a smooth surface due to lubricating effect of polyethylene.

As described above, the method of melt-molding a vinylidene fluoride resin of the present invention includes melt-molding, at a shear rate of 1 s⁻¹ to 600 s⁻¹, the composition containing a vinylidene fluoride resin having a weight average molecular weight of 250,000 to 450,000 and polyethylene having a melt flow rate of 0.04 g/10 min to 40 g/10 min, and an amount of the polyethylene being from 0.1 parts by mass to 5.0 parts by mass per 100 parts by mass of the vinylidene fluoride resin.

In the method of melt-molding a vinylidene fluoride resin according to the present invention, the vinylidene fluoride resin is a mixture of at least two types of copolymers forming a single phase system.

In the method of melt molding a vinylidene fluoride resin according to the present invention, the mixture of at least two types of copolymers contains at least a vinylidene fluoride/hexafluoropropylene copolymer A containing 0.5% by mass or greater but less than 7.0% by mass of hexafluoropropylene, and a vinylidene fluoride/hexafluoropropylene copolymer B containing 8.0% by mass or greater but less than 20.0% by mass of hexafluoropropylene.

In the method of melt molding a vinylidene fluoride resin according to the present invention, the amount of the vinylidene fluoride/hexafluoropropylene copolymer A is even more preferably from 20.0% by mass to 80% by mass relative to the total amount of the vinylidene fluoride resin; and the amount of the vinylidene fluoride/hexafluoropropylene copolymer B is even more preferably from 20.0% by mass to 80% by mass relative to the total amount of the vinylidene fluoride resin.

In the method of melt molding a vinylidene fluoride resin according to the present invention, the method of melt molding is preferably extrusion molding.

In the method of melt molding a vinylidene fluoride resin according to the present invention, the polyethylene is preferably low density polyethylene.

The melt molded product of a vinylidene fluoride resin according to the present invention is produced by the melt molding method described above.

Embodiments of the present invention will be described in further detail hereinafter using examples. The present invention is not limited to the examples below, and it goes without saying that various modes are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention.

### Examples

### Example 1

### Preparation of PVDF

As the PVDF, the following PVDF-A to PVDF-E were used.

### PVDF-A (Comparative Example):

A mixture in which the following a1 and a2 were mixed at a ratio of 40/60 (weight average molecular weight (Mw) = 380,000)
a1: VDF homopolymer (Mw = 350,000) powder
a2: VDF/HFP copolymer (HFP content = 6% by mass; Mw = 400,000) powder

### PVDF-B (Working Example):

A mixture in which the following b1 and b2 were mixed at a ratio of 60/40 (Mw = 420,000)
b1: VDF/HFP copolymer (HFP content = 1% by mass; Mw = 500,000) powder
b2: VDF/HFP copolymer (HFP content = 10% by mass; Mw = 240,000) powder

### PVDF-C (Comparative Example):

VDF homopolymer (Mw = 300,000)

### PVDF-D (Comparative Example):

VDF homopolymer (Mw = 210,000)

### PVDF-E (Comparative Example):

VDF homopolymer (Mw = 490,000)
Note that the method of measuring weight average molecular weights and the calculation of HFP contents were as follows.

### Measurement of Weight Average Molecular Weight

The weight average molecular weight was measured by gel permeation chromatography (GPC) and calculated using polystyrene as a standard sample. The sample for GPC analysis was prepared by dissolving 10 mg of PVDF in 10 mL of LiBr-NMP solution having a concentration of 10 mM. Measurement was performed using GPC-900, manufactured by JASCO Corporation (column: Shodex KD-806M, manufactured by Showa Denko K.K.) at a flow rate of 1 mL/min at a measurement temperature of 40°C.

### Calculation of HFP Content

The measurement of NMR spectrum of the PVDF is performed by AVANCE AC 400FT NMR spectrometer, manufactured by Bruker, using a commercially available deuterated DMF as is as a measurement solvent. The HFP content was determined by the methods of assignment and calculation described in a reference document: Maurizio Pianca, et al., Polymer, Volume 28, Issue 2, February 1987, pages 224-230.

### Preparation of PVDF Compound

PVDF compounds containing PVDF-A to PVDF-E described above and various polyethylene (PE) having different MFRs were prepared. However, for the cases where MFR exceeded 40, ARKON P-115 (aliphatic saturated hydrocarbon resin) or FT-115 (Fischer-Tropsch wax) was used in place of polyethylene. The chemical formula of the Fischer-Tropsch wax was CₙH₂ₙ₊₂ and had substantially the same structure as that of polyethylene wax. The compounded amount, type, and MFR of polyethylene, and the like are shown in Table 1. Furthermore, a number was assigned to each of the PVDF compounds.

For example, the compound A-12 was prepared as described below.

Raw materials with the following composition were fed to a twin screw extruder (TEM-26SS, manufactured by Toshiba Machine Co., Ltd.) and melt-kneaded at a cylinder temperature of 190°C. Thereafter, the mixture was melt-extruded in strand form from a die at an extrusion rate of 10 kg/hr and cut in cold water to form pellets.

### PVDF-A: 100 parts by mass

HDPE (Novatec HF560, manufactured by Japan Polyethylene Corporation): 0.5 parts by mass
Calcium carbonate (manufactured by Shiraishi Calcium Kaisha, Ltd.; average particle diameter 0.15 µm): 0.03 parts by mass
Irganox 1076 (manufactured by BASF): 0.12 parts by mass
Other PVDF compounds were also prepared by appropriately changing the compounded amounts.

**[Table 1]**

| No. | Compounded amount of PE | PE | | | | Compound No. | | | | |
|---|---|---|---|---|---|---|---|---|---|---|
| | | Manufacturer | Grade | Type of PE | MFR/g/10 min | PVDF-A | PVDF-B | PVDF-C | PVDF-D | PVDF-E |
| 1 | No PE | - | - | - | - | A-1 | B-1 | C-1 | D-1 | E-1 |
| 2 | 0.5 parts by mass | Mitsui Chemicals, Inc. | Mipelon | UHMWPE | Excessively small quantity (< 0.04) | A-2 | B-2 | C-2 | D-2 | E-2 |
| 3 | 0.5 parts by mass | Asahi Kasei Chemicals Corp. | Sunfine UH | UHMWPE | Excessively small quantity (< 0.04) | A-3 | B-3 | C-3 | D-3 | E-3 |
| 4 | 0.5 parts by mass | Prime Polymer Co., Ltd. | HI-ZEX 7800M | HDPE | 0.04 | A-4 | B-4 | C-4 | D-4 | E-4 |
| 5 | 0.5 parts by mass | Asahi Kasei Chemicals Corp. | Sunfine LH-SH810 | HDPE | 0.08 | - | B-5 | - | - | - |
| 6 | 0.5 parts by mass | Prime Polymer Co., Ltd. | HI-ZEX 5000SR | HDPE | 0.37 | A-6 | - | - | - | - |
| 7 | 0.5 parts by mass | The Dow Chemical Company | Engage 8150 | Ethylene-octene copolymer | 0.5 | A-7 | - | - | - | - |
| 8 | 0.5 parts by mass | Asahi Kasei Chemicals Corp. | Sunfine LH-600 | HDPE | 0.8 | - | B-8 | - | - | - |
| 9 | 0.5 parts by mass | The Dow Chemical Company | ETS9064 | LDPE | 1 | A-9 | - | - | - | - |
| 10 | 0.5 parts by mass | Sumitomo Seika Chemicals Co., Ltd. | Flo-Thene UF1.5N | LDPE | 1.5 | - | B-10 | - | - | - |
| 11 | 0.5 parts by mass | The Dow Chemical Company | Affinity PF1140 | LDPE | 1.6 | A-11 | - | - | - | - |
| 12 | 0.5 parts by mass | Japan Polyethylene Corporation | Novatec HF-560 | HDPE | 7 | A-12 | - | C-12 | D-12 | E-12 |
| 13 | 0.5 parts by mass | Sumitomo Seika Chemicals Co., Ltd. | Flo-Beads CL-8007 | LDPE | 7 | - | B-13 | - | - | - |
| 14 | 0.5 parts by mass | Sumitomo Seika Chemicals Co., Ltd. | Flo-Beads HE-3040 | HDPE | 40 | - | B-14 | - | - | - |
| 15 | 0.5 parts by mass | Arakawa Chemical Industries, Ltd. | ARKON P-115 | Alicyclic saturated hydrocarbon resin | Excessively large quantity (> 40) | A-15 | - | - | - | - |
| 16 | 0.5 parts by mass | Nippon Seiro Co., Ltd. | FT-115 | Paraffin wax | Excessively large quantity (> 40) | A-16 | - | - | - | - |
| 17 | 0.25 parts by mass | Japan Polyethylene Corporation | Novatec HF-560 | HDPE | 7 | - | - | C-17 | - | - |
| 18 | 0.5 parts by mass | Japan Polyethylene Corporation | Novatec HF-560 | HDPE | 7 | - | - | C-18 | - | - |
| 19 | 1.0 part by mass | Japan Polyethylene Corporation | Novatec HF-560 | HDPE | 7 | - | - | C-19 | - | - |
| 20 | 1.0 part by mass | Prime Polymer Co., Ltd. | Hizex7800M | HDPE | 0.04 | - | - | C-20 | - | - |
| 21 | 0.5 parts by mass | Prime Polymer Co., Ltd. | Moretec V-0398CN | LDPE | 3.3 | - | B-21 | - | - | - |

### Measurement of Melt Viscosity

Melt viscosity of each compound was measured at 240°C by using Capilograph 1D, manufactured by Toyo Seiki Seisaku-sho, Ltd., using a capillary die having an inner diameter of 1 mm and a thickness of 10 mm.

### Results

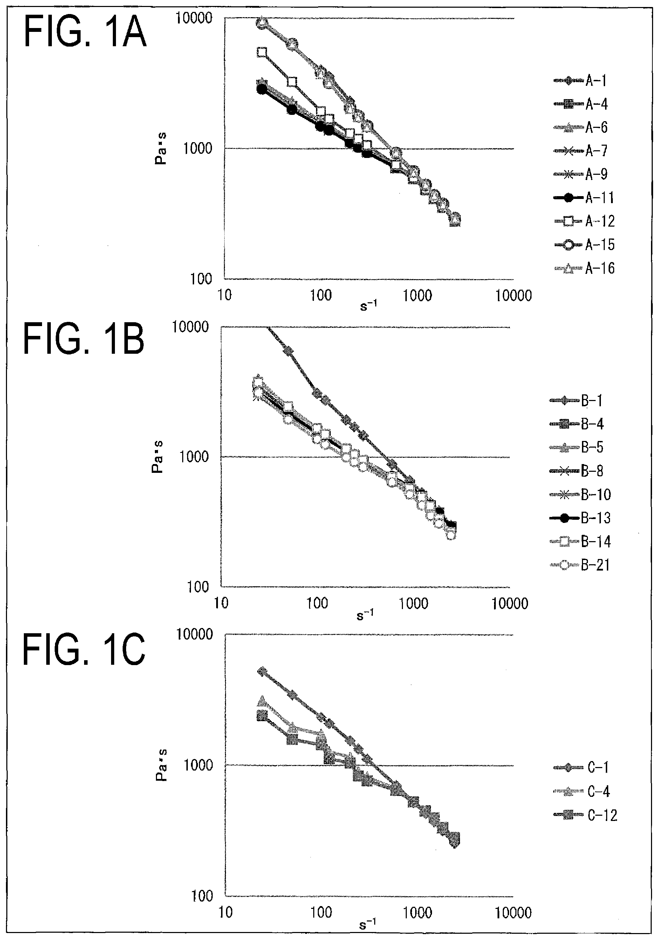

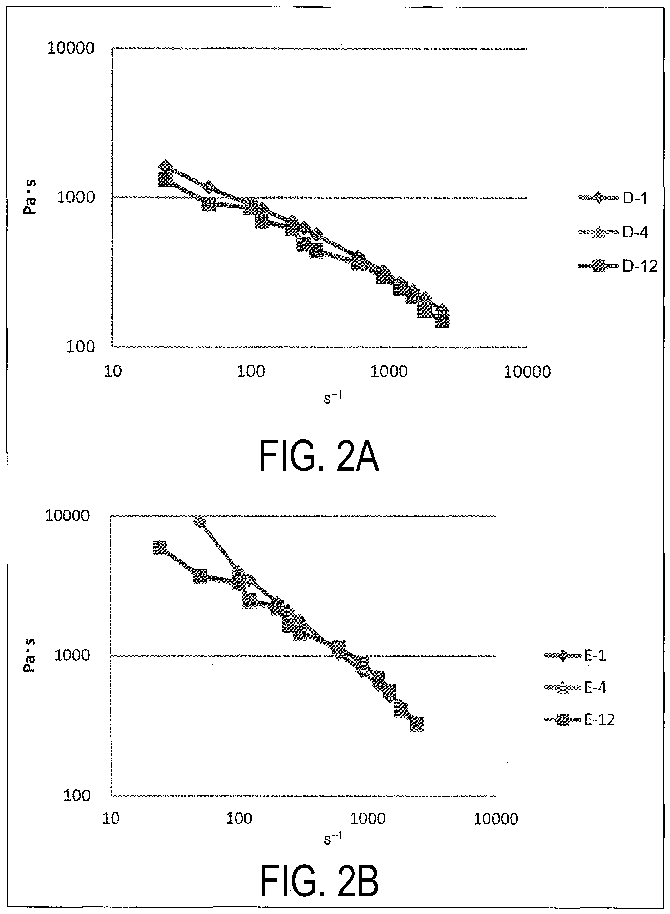

Melt viscosities (Pa·s) at various shear rates (s⁻¹) at 240°C were shown in FIGS. 1A to 1C and FIGS. 2A and 2B. FIG. 1A shows the result of the PVDF-A (Comparative Example), FIG. 1B shows the result of the PVDF-B (Working Example), and FIG. 1C shows the result of the PVDF-C (Comparative Example). FIG. 2A shows the result of the PVDF-D (Comparative Example), and FIG. 2B shows the result of the PVDF-E (Comparative Example). Furthermore, melt viscosities at a shear rate of 24 s⁻¹ at 240°C were shown in Table 2.

**[Table 2]**

| No. | PE | | | Melt viscosity of compound (Pa·s) | | | | |
|---|---|---|---|---|---|---|---|---|
| | Compounded amount of PE | Grade | MFR/g/10 min | PVDF-A | PVDF-B | PVDF-C | PVDF-D | PVDF-E |
| I | No PE | - | - | 9150 | 12167 | 5207 | 1612 | 17500 |
| 2 | 0.5 parts by mass | Mipelon | Excessively small quantity (< 0.04) | Pellet failure | Pellet failure | Pellet failure | Pellet failure | Pellet failure |
| 3 | 0.5 parts by mass | Sunfine UII | Excessively small quantity (< 0.04) | Pellet failure | Pellet failure | Pellet failure | Pellet failure | Pellet failure |
| 4 | 0.5 parts by mass | HI-ZEX 7800M | 0.04 | 3039 | 3758 | 3111 | 1315 | 5945 |
| 5 | 0.5 parts by mass | Sunfine LII-SII810 | 0.08 | - | 3152 | - | - | - |
| 6 | 0.5 parts by mass | HI-ZEX 5000SR | 0.37 | 3194 | - | - | - | - |
| 7 | 0.5 parts by mass | Engage 8150 | 0.5 | 2941 | - | - | - | - |
| 8 | 0.5 parts by mass | Sunfine LH-600 | 0.8 | - | 2946 | - | - | - |
| 9 | 0.5 parts by mass | F.TS9064 | 1 | 2922 | - | - | - | - |
| 10 | 0.5 parts by mass | Flo-Thene UF1.5N | 1.5 | - | 3140 | - | - | - |
| 11 | 0.5 parts by mass | Affinity PF1140 | 1.6 | 2852 | - | - | - | - |
| 12 | 0.5 parts by mass | Novatec IIF-560 | 7 | 5460 | - | 2394 | 1316 | 5935 |
| 13 | 0.5 parts by mass | Flo-Beads CL-8007 | 7 | - | 3152 | - | - | - |
| 14 | 0.5 parts by mass | Flo-Beads HE-3040 | 40 | - | 3474 | - | - | - |
| 15 | 0.5 parts by mass | ARKON P-115 | Excessively large quantity (> 40) | 9110 | - | - | - | - |
| 16 | 0.5 parts by mass | FT-115 | Excessively large quantity (> 40) | 9492 | - | - | - | - |
| 17 | 0.25 parts by mass | Novatec HF-560 | 7 | - | - | 2678 | - | - |
| 18 | 0.5 parts by mass | Novatec HF-560 | 7 | - | - | 2394 | - | - |
| 19 | 1.0 part by mass | Novatec IIF-560 | 7 | - | - | 2174 | - | - |
| 20 | 1.0 part by mass | HI-ZEX 7800M | 0.04 | - | - | 2516 | - | - |
| 21 | 0.5 parts by mass | Moretec V-0398CN | 3.3 | - | 3114 | - | - | - |
| Minimum viscosity of compound (when PE content is 0.5 parts by mass)/Viscosity when no PE is contained | | | | 31% | 24% | 46% | 82% | 34% |

As shown in FIG. 1A, A-4 to A-12, in which polyethylene having an MFR of 0.04 to 40 was added, had lower melt viscosities compared to A-1, in which no polyethylene was added. On the other hand, A-15 and A-16, in which polyethylene having an MFR greater than 40 was added, had melt viscosities that were similar to that of A-1. Similarly, B-4 to B-21, in which polyethylene having an MFR of 0.04 to 40 was added, had lower melt viscosities compared to B-1, in which no polyethylene was added. C-4 and C-12, in which polyethylene having an MFR of 0.04 to 40 was added, had lower melt viscosities compared to C-1, in which no polyethylene was added. Furthermore, effect of the polyethylene was significant at low shear rate region that was lower than 600 s⁻¹, and effect on melt viscosity reduction was poor at shear rates higher than this shear rate. That is, it was confirmed that the effect of reducing melt viscosity due to polyethylene of the present specification is exhibited by melt-molding at low shear rate region of 600 s⁻¹ or less. Meanwhile, as shown in FIGS. 2A and 2B, the PVDF-D having an Mw of 210,000 and the PVDF-E having an Mw of 490,000 exhibited poor effect on melt viscosity reduction.

Furthermore, as shown in Table 2, when polyethylene having an MFR of less than 0.04 was compounded, the miscibility of the polyethylene was poor, and only pellets with appearance failure were obtained. On the other hand, when polyethylene having an MFR of greater than 40 was compounded, the effect of reducing melt viscosity was poor.

Furthermore, from the comparison of C-17 to C-19 and the comparison of C-4 and C-20 in Table 2, it was found that the effect of reducing melt viscosity was superior as the added amount of the polyethylene increases, from 0.25 parts by mass, 0.5 parts by mass, to 1.0 part by mass.

Furthermore, the ratio of the minimum melt viscosity of the compound when the polyethylene content was 0.5 parts by mass to the melt viscosity when no polyethylene was contained was the lowest in the PVDF-B, and a better effect of reducing melt viscosity was exhibited by the PVDF-B.

### Working Example 2

### Producing Molded Product by Extrusion Molding

The compound B-10 was fed to a single screw extrusion molding device (PEX-40-24H, manufactured by Plagiken Co., Ltd.) and melt-extruded from a T-die at a resin temperature of 240°C to produce a PVDF sheet having a thickness of 3 mm in a production condition of 1 cm/min.

As a tensile test piece, a vinylidene fluoride resin sheet was punched out to produce a Type IV test piece of ASTM D638. As an Izod impact strength test piece, the PVDF was cut and a V-notch was formed thereon to produce a test piece of ASTM D256.

### Producing Molded Product by Injection Molding

The compound B-10 was fed to an injection molding device (EC100N-3Y, manufactured by Toshiba Machine Co., Ltd.) and injection-molded at a heater temperature of 220°C and a mold temperature of 100°C. In the injection molding machine, a nozzle diameter was 3 mm, a cylinder diameter was 32 mm, and injection speed was 10 mm/s.

The tensile test piece was produced by injection molding using a Type IV mold of ASTM D638. As the Izod impact strength test piece, a test piece of ASTM D256 was produced by forming a V-notch on a molded product obtained by the injection molding.

### Tensile Test

For the molded products of extrusion molding and injection molding (tensile test pieces), tensile tests were performed by AG-2000E, manufactured by Shimadzu Corporation, at a gauge length of 20 mm and a tensile speed of 50 mm/min.

### Izod Impact Strength Test

For the molded products of extrusion molding and injection molding (Izod impact strength test pieces), Izod impact strength measurements were performed by an Izod impact strength tester, manufactured by Toyo Seiki Seisaku-sho, Ltd.

### Results

Results of the tests are shown in Table 3. With the extrusion molded products, superior values were obtained for the deformation at break and Izod impact strength of the molded product. It is conceived that this is because, in the extrusion molded products, superior toughness that is originated in polyvinylidene fluoride was exhibited due to small orientation of polymer chain caused by the small shear rate during molding.

**[Table 3]**

| Compound | B-10 | B-10 |
|---|---|---|
| Molding method | Injection molding | Extrusion molding |
| Tensile modulus of elasticity (Mpa) | 1139 | 960 |
| Deformation at break (%) | 21 | 439 |
| Izod impact strength (KJ/m²) | 74 | 90 |

### Industrial Applicability

The present invention can be used in melt molding of a vinylidene fluoride resin.

## Claims

1. A melt molding method of a vinylidene fluoride resin, the method comprising melt-molding, at a shear rate of 1 s⁻¹ to 600 s⁻¹, a composition containing a vinylidene fluoride resin having a weight average molecular weight of 250,000 to 450,000 and polyethylene having a melt flow rate of 0.04 g/10 min to 40 g/10 min, and an amount of the polyethylene being from 0.1 parts by mass to 5.0 parts by mass per 100 parts by mass of the vinylidene fluoride resin, wherein the vinylidene fluoride resin is a mixture of at least two types of copolymers containing at least a vinylidene fluoride/hexafluoropropylene copolymer A containing 0.5% by mass or greater but less than 7.0% by mass of hexafluoropropylene, and a vinylidene fluoride/hexafluoropropylene copolymer B containing 8.0% by mass or greater but less than 20.0% by mass of hexafluoropropylene, the mixture forming a single phase system.

2. The melt molding method according to claim 1, wherein an amount of the vinylidene fluoride/hexafluoropropylene copolymer A is from 20.0% by mass to 80% by mass relative to a total amount of the vinylidene fluoride resin; and
an amount of the vinylidene fluoride/hexafluoropropylene copolymer B is from 20.0% by mass to 80% by mass relative to the total amount of the vinylidene fluoride resin.

3. The melt molding method according to any one of claims 1 to 2, wherein the method of the melt molding is extrusion molding.

4. The melt molding method according to any one of claims 1 to 3, wherein the polyethylene is a low density polyethylene.

5. A melt molded product of a vinylidene fluoride resin, the melt molded product being produced by the melt molding method described in any one of claims 1 to 4.

## Patentansprüche

1. Schmelzgießverfahren eines Vinylidenfluoridharzes, wobei das Verfahren das Schmelzgießen einer Zusammensetzung, die ein Vinylidenfluoridharz mit einem Molekulargewicht-Gewichtsmittel von 250.000 bis 450.000 und Polyethylen mit einer Schmelzfließgeschwindigkeit von 0,04 g/10 min bis 40 g/10 min enthält, mit einer Schergeschwindigkeit von 1 s⁻¹ bis 600 s⁻¹ umfasst, und wobei eine Menge des Polyethylens von 0,1 Gewichtsteile bis 5,0 Gewichtsteile pro 100 Gewichtsteile des Vinylidenfluoridharzes beträgt, wobei das Vinylidenfluoridharz eine Mischung von mindestens zwei Arten von Copolymeren ist, die mindestens ein Vinylidenfluorid/Hexafluorpropylen-Copolymer A, das zu 0,5 Masse% oder mehr, aber weniger als 7,0 Masse% Hexafluorpropylen enthält, und ein Vinylidenfluorid/Hexafluorpropylen-Copolymer B, das zu 8,0 Masse% oder mehr, aber weniger als 20,0 Masse% Hexafluorpropylen enthält, enthält, wobei die Mischung ein Einphasensystem bildet.

2. Schmelzgießverfahren nach Anspruch 1, wobei eine Menge des Vinylidenfluorid/Hexafluorpropylen-Copolymers A von 20,0 Masse% bis 80 Masse% der Gesamtmenge des Vinylidenfluoridharzes beträgt; und
eine Menge des Vinylidenfluorid/Hexafluorpropylen-Copolymers B von 20,0 Masse% bis 80 Masse% der Gesamtmenge des Vinylidenfluoridharzes beträgt.

3. Schmelzgießverfahren nach einem der Ansprüche 1 bis 2, wobei das Verfahren des Schmelzgießens Extrusionsgießen ist.

4. Schmelzgießverfahren nach einem der Ansprüche 1 bis 3, wobei das Polyethylen ein Hochdruckpolyethylen ist.

5. Schmelzgegossenes Produkt eines Vinylidenfluoridharzes, wobei das schmelzgegossene Produkt durch das in einem der Ansprüche 1 bis 4 beschriebene Schmelzgießverfahren hergestellt wird.

## Revendications

1. Procédé de moulage en fusion d'une résine de fluorure de vinylidène, le procédé comprenant un moulage en fusion, à un taux de cisaillement de 1 s⁻¹ à 600 s⁻¹, d'une composition contenant une résine de fluorure de vinylidène ayant une masse moléculaire moyenne en poids de 250 000 à 450 000 et du polyéthylène ayant un indice de fluidité à l'état fondu de 0,04 g/10 min à 40 g/10 min, et une quantité du polyéthylène allant de 0,1 partie en masse à 5,0 parties en masse pour 100 parties en masse de la résine de fluorure de vinylidène, dans lequel la résine de fluorure de vinylidène est un mélange d'au moins deux types de copolymères contenant au moins un copolymère A de fluorure de vinylidène/hexafluoropropylène contenant 0,5 % en masse ou plus, mais moins de 7,0 % en masse d'hexafluoropropylène, et un copolymère B de fluorure de vinylidène/hexafluoropropylène contenant 8,0 % en masse ou plus, mais moins de 20,0 % en masse d'hexafluoropropylène, le mélange formant un système monophasique.

2. Procédé de moulage en fusion selon la revendication 1, dans lequel une quantité du copolymère A de fluorure de vinylidène/hexafluoropropylène va de 20,0 % en masse à 80 % en masse par rapport à une quantité totale de la résine de fluorure de vinylidène ; et
une quantité du copolymère B de fluorure de vinylidène/hexafluoropropylène va de 20,0 % en masse à 80 % en masse par rapport à la quantité totale de la résine de fluorure de vinylidène.

3. Procédé de moulage en fusion selon l'une quelconque des revendications 1 à 2, dans lequel le procédé du moulage en fusion est un moulage par extrusion.

4. Procédé de moulage en fusion selon l'une quelconque des revendications 1 à 3, dans lequel le polyéthylène est un polyéthylène à basse densité.

5. Produit moulé en fusion d'une résine de fluorure de vinylidène, le produit moulé en fusion étant produit par le procédé de moulage en fusion décrit dans l'une quelconque des revendications 1 à 4.
